# FASCICULE DE BREVET EUROPEEN

(11) **EP 2 738 589 B1**
(45) Date de publication et mention de la délivrance du brevet: **16.09.2015**
(21) Numéro de dépôt: 13194766.5
(22) Date de dépôt: 28.11.2013
(51) Int. Cl.: G02B 27/01

(54) **Viseur tête haute à confort de visualisation amélioré**
Komfort-Head-Up-System mit verbesserter Anzeige
Heads-up display with improved viewing comfort

(30) Priorité: 29.11.2012 FR 1261399
(43) Date de publication de la demande: 04.06.2014
(73) Titulaire: COMMISSARIAT A L'ENERGIE ATOMIQUE ET AUX ENERGIES ALTERNATIVES, 75015 Paris (FR)
(72) Inventeur: Rossini, Umberto, 38500 COUBLEVIE (FR); Doyeux, Henri, 38140 BEAUCROISSANT (FR); Sarrasin, Denis, 38360 SASSENAGE (FR)
(74) Mandataire: Thibon, Laurent

(56) Documents cités:
- US-A- 4 591 844
- US-A1- 2007 097 140
- ROBERT D ET AL: "High Resolution LCD Projector for Extra-Wide Field of View Head-Up Display", PROCEEDINGS OF SPIE - THE INTERNATIONAL SOCIETY FOR OPTICAL ENGINEERING, COCKPIT DISPLAYS X, vol. 5080, 22 avril 2003 (2003-04-22), pages 320-329, XP055071659, DOI: 10.1117/12.485731

## Description

### Domaine

La présente description concerne un viseur tête haute, encore appelé afficheur tête haute, collimateur tête haute ou système de visualisation tête haute, comprenant un écran d'affichage matriciel.

### Exposé de l'art antérieur

Les viseurs tête haute, encore connus sous le sigle HUD, de l'anglais Head-Up Display, sont des systèmes d'affichage en réalité augmentée qui permettent d'intégrer une information visuelle sur une scène réelle vue par un observateur. En pratique, de tels systèmes peuvent être placés dans la visière d'un casque, dans le cockpit d'un avion ou au sein de l'habitacle d'un véhicule. Ils sont ainsi positionnés à faible distance des yeux de l'utilisateur, par exemple à quelques centimètres ou dizaines de centimètres.

Les informations visuelles sont fournies par un écran d'affichage. De façon classique, il s'agit d'un écran à tube cathodique, en général à affichage vectoriel. La tendance actuelle est de remplacer les écrans à tube cathodique des viseurs à tête haute par des écrans d'affichage matriciel à cristaux liquides ou à diodes électroluminescentes.

Toutefois, lorsqu'une ligne quasiment horizontale mais non parfaitement horizontale doit être affichée sur un écran matriciel, l'observateur perçoit de façon nette une ligne brisée très saccadée, ce qui est inconfortable. En outre, pour certains types d'écrans matriciels, notamment à diodes électroluminescentes organiques, l'affichage d'une ligne verticale sur l'écran peut entraîner des appels de courant importants. Ceci peut rendre difficile l'utilisation des écrans matriciels dans les viseurs tête haute.

Le document "High Resolution LCD Projector for Extra-Wide Field of View Head-Up Display," Robert D. Brown et al., Proc. SPIE Cockpit Displays X, Vol. 5080, pages 320-329, 22 avril 2003, XP055071659, DOI: 10.1117/12.485731, divulgue un viseur tête haute selon le préambule de la revendication 1.

### Résumé de l'invention

Ainsi, un mode de réalisation prévoit un viseur tête haute comprenant un écran d'affichage matriciel comprenant des pixels d'affichage agencés en rangées et en colonnes, dans lequel l'écran d'affichage est pivoté, autour d'un axe perpendiculaire à l'écran, d'un angle d'inclinaison compris entre 10 et 80 degrés, par rapport à la position de l'écran d'affichage pour laquelle un groupe de pixels d'affichage adjacents activés d'une même rangée apparaît à un observateur orienté selon la direction horizontale ou verticale.

Selon un mode de réalisation, l'écran est un écran à diodes électroluminescentes.

Selon un mode de réalisation, l'écran est un écran à diodes électroluminescentes organiques.

Selon un mode de réalisation, l'écran est un écran à cristaux liquides.

Selon un mode de réalisation, le viseur comprend un module de commande de l'écran d'affichage adapté à déterminer une première image numérique comprenant une matrice de pixels d'image, à déterminer une deuxième image numérique à partir de la première image numérique, la deuxième image correspondant à la rotation de la première image d'un angle opposé à l'angle d'inclinaison et à commander l'affichage de la deuxième image sur l'écran d'affichage.

Selon un mode de réalisation, l'écran d'affichage comprend un circuit d'activation des pixels d'affichage, le viseur comprenant, en outre, un module de commande de l'écran d'affichage adapté à déterminer une première image numérique comprenant une matrice de pixels d'image et à fournir des signaux de commande au circuit d'activation pour l'affichage de la première image, le circuit d'activation étant adapté à modifier les signaux de commande pour l'affichage d'une deuxième image numérique correspondant à la rotation de la première image d'un angle opposé à l'angle d'inclinaison.

Selon un mode de réalisation, l'angle d'inclinaison est compris entre 15 et 40 degrés par rapport à la direction horizontale ou verticale.

Selon un mode de réalisation, l'angle d'inclinaison est compris entre 20 et 30 degrés par rapport à la direction horizontale ou verticale.

Selon un mode de réalisation, le viseur comprend, en outre, une lame semi-transparente sur laquelle sont projetées les images fournies par l'écran d'affichage.

Selon un mode de réalisation, le viseur comprend, en outre, un système optique adapté à collimater à l'infini l'image affichée sur l'écran d'affichage.

### Brève description des dessins

Ces caractéristiques et avantages, ainsi que d'autres, sont exposés en détail dans la description suivante de modes de réalisation particuliers faite à titre non limitatif en relation avec les figures jointes parmi lesquelles :
la figure 1 représente, sous la forme d'un schéma-bloc, un exemple de viseur tête haute ;
la figure 2 représente, de façon schématique, un écran matriciel classique sur lequel sont affichés un segment horizontal et un segment vertical ;
la figure 3 représente une partie d'un écran matriciel classique sur lequel est affiché un segment quasi-horizontal ;
la figure 4 représente, de façon partielle et schématique, un exemple de pixel d'affichage d'un écran matriciel à diodes électroluminescentes organiques ;
la figure 5 représente un exemple d'écran matriciel selon un mode de réalisation ; et
la figure 6 représente, sous la forme d'un schéma-bloc, un mode de réalisation du module de commande de la figure 1.

Par souci de clarté, de mêmes éléments ont été désignés par de mêmes références aux différentes figures et, de plus, comme cela est habituel dans la représentation des circuits, les diverses figures ne sont pas tracées à l'échelle.

### Description détaillée

Dans la suite de la description, sauf indication contraire, les termes "quasiment", "sensiblement", "environ" et "de l'ordre de" signifient "à 10 % près".

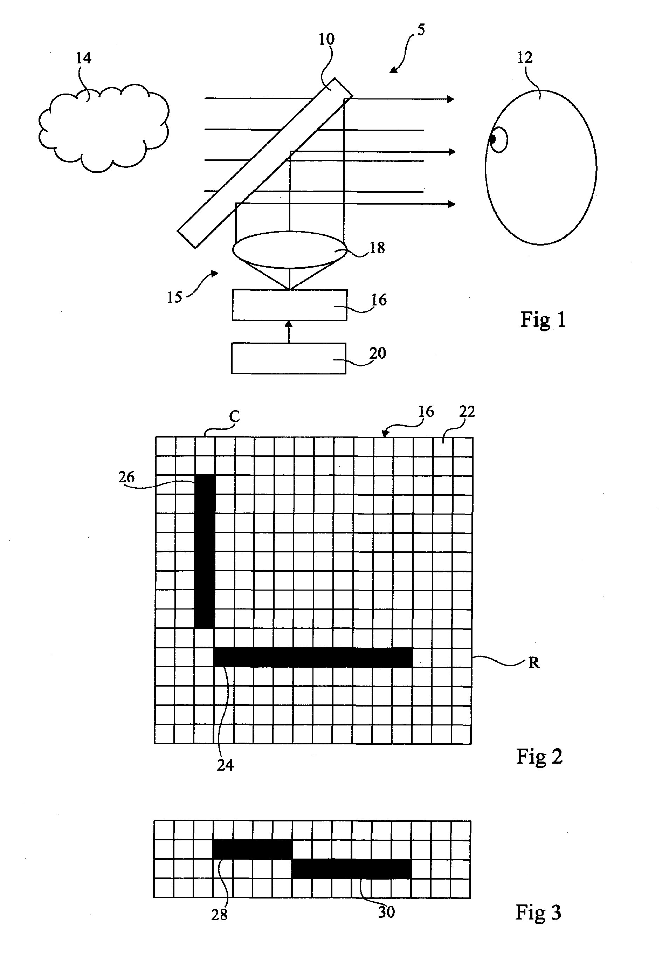

La figure 1 illustre, de façon schématique, le fonctionnement d'un viseur tête haute 5.

Une lame semi-transparente 10 est placée entre l'oeil d'un utilisateur 12 et une scène à observer 14. Les objets de la scène à observer 14 sont généralement situés à l'infini ou à une distance importante de l'observateur 12. La lame semi-transparente 10 est inclinée selon un angle de 45° par rapport un axe reliant la scène 14 et l'observateur 12. La lame 10 permet de transmettre les informations provenant de la scène 14 à destination de l'observateur 12, sans altérer ces informations.

Un système de projection 15 est prévu pour projeter une image vue par l'observateur 12 à la même distance que l'image réelle de la scène 14 et la superposer à celle-ci. Ce système comprend un écran d'affichage 16 situé au point focal objet d'un système optique 18. L'écran d'affichage 16 est commandé par un module de commande d'écran d'affichage 20 qui détermine les images à afficher, par exemple à partir de signaux fournis par des capteurs non représentés.

Le système de projection 15 est placé perpendiculairement à l'axe reliant la scène 14 et l'observateur 12 de façon que le faisceau issu du système optique 18 atteigne la lame semi-transparente 10 perpendiculairement à cet axe. Le faisceau issu du système optique 18 atteint ainsi la lame semi-transparente 10 avec un angle de 45° par rapport à sa surface et est réfléchi vers l'observateur 12. L'image affichée sur l'écran 16 est collimatée à l'infini par le système optique 18. L'observateur 12 n'a pas à faire d'effort d'accommodation, ce qui limite la fatigue visuelle de ce dernier. La lame semi-transparente 10 combine l'image de la scène 14 et l'image issue du système de projection 15, d'où il résulte que l'observateur 12 visualise une image comprenant l'image projetée superposée à l'image de la scène 14.

L'écran d'affichage 16 peut être un écran matriciel. Il peut s'agir d'un écran monochrome ou d'un écran couleur. On appelle pixel d'image le plus petit élément d'une image numérique susceptible d'être affichée par l'écran matriciel 16. On appelle pixel d'affichage le plus petit élément de l'écran 16 pour afficher une image. Pour un écran couleur, l'affichage d'un pixel d'image peut nécessiter plusieurs pixels d'affichage, par exemple des pixels d'affichage rouge, vert et bleu. Les pixels d'affichage d'un écran matriciel sont régulièrement répartis en rangées et en colonnes. Un écran d'affichage 16 monochrome comprend, par exemple, entre 300 et 1000 rangées et 300 et 1000 colonnes. Pour l'affichage d'image ayant globalement une forme circulaire, des écrans présentant sensiblement le même nombre de rangées et de colonnes peuvent avantageusement être utilisés. L'écran d'affichage matriciel 16 est, par exemple, un écran à cristaux liquides ou LCD (sigle anglais pour Liquid Crystal Display). Il peut s'agir également d'un écran à diodes électroluminescentes, par exemple à diodes électroluminescentes organiques ou OLED (sigle anglais pour Organic Light-Emitting Diode).

La figure 2 représente un exemple d'écran d'affichage matriciel 16 comprenant des pixels d'affichage 22 répartis en 16 rangées et en 16 colonnes. On a représenté de façon schématique un pixel d'affichage activé, c'est-à-dire projetant un signal lumineux, par un carré noir et un pixel d'affichage non activé, c'est-à-dire ne projetant pas de signal lumineux, par un carré blanc. De façon générale, l'image fournie par l'écran d'affichage 16 dans un viseur tête haute est une image relativement simple comprenant des informations utiles pour l'observateur 12, notamment les informations fournies par des instruments de bord. Ces images peuvent, dans une large mesure, être formées à partir de segments de droite. A titre d'exemple, deux segments 24, 26 sont représentés en figure 2. Le segment 24 est un segment obtenu par l'activation de pixels d'affichage adjacents d'une même rangée R de l'écran 16 et le segment 26 est obtenu par l'activation de pixels d'affichage adjacents d'une même colonne C.

L'écran 16, le système optique 18 et la lame semi-transparente 10 sont, de façon classique, agencés les uns par rapport aux autres de façon que le segment 24 soit perçu comme étant horizontal par l'observateur 12 et que le segment 26 soit perçu comme étant vertical par l'observateur 12.

Un inconvénient du système de projection 15 décrit précédemment est le suivant : pour certaines applications, notamment lorsque le viseur tête haute équipe le cockpit d'un avion, une information visuelle représentant l'horizon artificiel est affichée. L'horizon artificiel est généralement représenté par l'affichage d'un ou de plusieurs segments de droite. Lorsque l'angle de roulis de l'avion est nul, le segment représentant l'horizon artificiel est horizontal, ce qui peut correspondre au segment 24 de la figure 2, et lorsque l'angle de roulis de l'avion n'est pas nul, le segment est affiché de façon inclinée par rapport à la direction horizontale. En pratique, même lorsque l'avion est dans une phase de vol stabilisé, l'angle de roulis tend néanmoins à osciller légèrement autour de zéro. Ceci se traduit par de légères oscillations du segment représentant l'horizon artificiel par rapport à la direction horizontale.

En figure 3, on a représenté, de façon schématique, une partie de l'écran sur lequel est affiché le niveau d'un horizon artificiel légèrement incliné par rapport à la direction horizontale. L'horizon artificiel est représenté par plusieurs groupes jointifs de pixels adjacents de rangées différentes et adjacentes, deux groupes 28, 30 étant représentés en figure 3. Les groupes 28, 30 pouvant avoir un nombre important de pixels, l'observateur 12 ne perçoit pas le niveau de l'horizon comme un segment continu, mais comme une suite de paliers, ce qui est inconfortable. En outre, une faible variation de l'angle de roulis peut entraîner un déplacement important des groupes de pixels 28, 30 activés, ce qui est également inconfortable.

L'utilisation de l'écran 16, tel que représenté en figure 2, présente, en outre, un autre inconvénient, décrit ci-après, lorsque l'écran est à diodes électroluminescentes, par exemple à diodes électroluminescentes organiques.

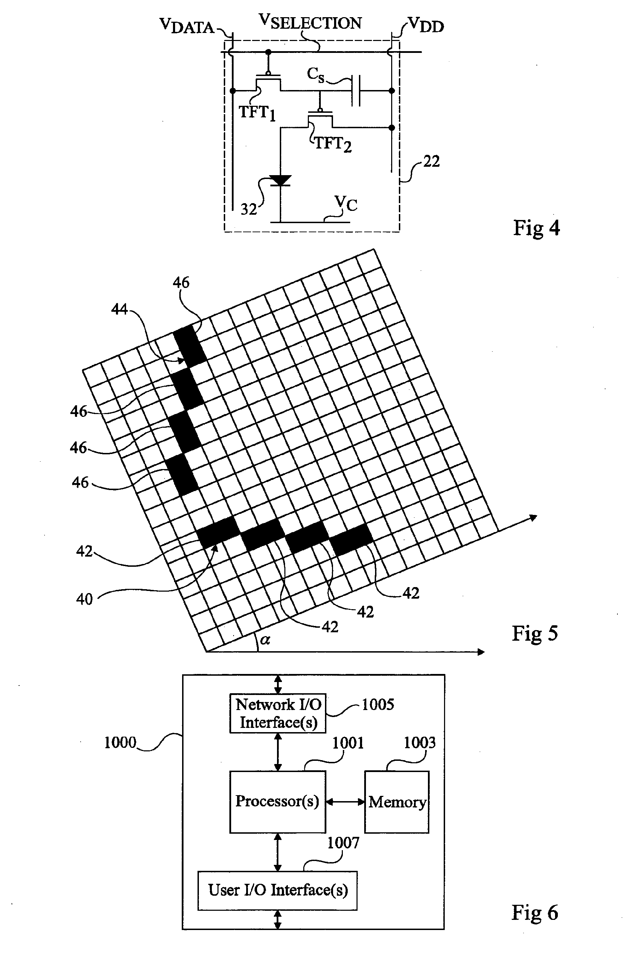

La figure 4 représente, de façon partielle et schématique, un exemple de réalisation d'un pixel d'affichage 22 d'un écran matriciel OLED. Chaque pixel d'affichage 22 comprend une diode électroluminescente organique 32, deux transistors à effet de champ TFT₁ et TFT₂, par exemple des transistors à film mince, et un condensateur C_{S}. La cathode de la diode 32 est reliée à une électrode de cathode V_{C} qui peut être commune à tous les pixels d'affichage 22 de l'écran. Pour chaque rangée de l'écran, une ligne de sélection V_{SELECTION} est connectée à la grille du transistor TFT₁ de tous les pixels d'affichage de la rangée. Pour chaque colonne de l'écran, une ligne de transmission d'un signal de donnée V_{DATA} est connectée à l'une des bornes de conduction du transistor TFT₁ de chaque pixel d'affichage de la colonne. L'autre borne de conduction du transistor TFT₁ est connectée à une armature du condensateur C_{S} et à la grille du transistor TFT₂. Pour chaque colonne de l'écran, une ligne d'alimentation V_{DD} est connectée, pour chaque pixel d'affichage 22 de la colonne, à l'autre armature du condensateur C_{S} et à une borne de conduction du transistor TFT₂, l'autre borne de conduction du transistor TFT₂ étant connectée à l'anode de la diode 32.

Lors de l'activation du pixel d'affichage 22, la diode 32 est traversée par un courant transmis par la ligne d'alimentation V_{DD} et dont l'intensité dépend du rayonnement souhaité du pixel d'affichage. Pour que l'observateur 12 puisse voir de façon convenable les informations visuelles affichées par le viseur tête haute, il est souhaitable que la luminance des pixels d'affichage activés de l'écran 16 soit au moins de 40000 candelas/m². Pour afficher un segment vertical, par exemple le segment 26 représenté en figure 2, des pixels d'affichage adjacents d'une même colonne doivent être activés simultanément. Un inconvénient de l'écran matriciel 16 est que la ligne d'alimentation V_{DD} est connectée à tous les pixels d'affichage 22 d'une même colonne. De ce fait, le courant total devant circuler dans la ligne d'alimentation V_{DD}, pour l'activation simultanée d'un groupe de pixels d'affichage d'une même colonne, peut être supérieur à plusieurs milliampères. Cela impose de fortes contraintes lors de la conception de l'écran d'affichage 16 sur les dimensions des pistes métalliques utilisées pour réaliser les lignes d'alimentation V_{DD} pour assurer que les lignes d'alimentation V_{DD} puissent transporter de façon convenable de tels courants.

Ainsi, un objet d'un mode de réalisation est de prévoir un viseur tête haute comprenant un écran d'affichage matriciel palliant au moins en partie certains des inconvénients des systèmes existants.

Un autre objet d'un mode de réalisation est que le confort de perception des informations visuelles projetées par le viseur tête haute est amélioré.

Un autre objet d'un mode de réalisation est que les pics d'intensité des courants mis en oeuvre lors du fonctionnement de l'écran matriciel sont réduits.

Un autre objet d'un mode de réalisation est que le viseur tête haute peut être mis en oeuvre avec un écran à cristaux liquides ou un écran à diodes électroluminescentes, notamment à diodes électroluminescentes organiques.

La présente invention vise à modifier la position de l'écran d'affichage 16 par rapport au système optique 18 et/ou à la lame semi-transparente 10 par rapport à la position classique de l'écran d'affichage 16 pour laquelle l'observateur 12 voit un segment horizontal (ou éventuellement vertical) lorsque des pixels d'affichage adjacents d'une même rangée de l'écran 16 sont activés. La présente invention consiste à orienter l'écran d'affichage 16 par rapport au système optique 18 et à la lame semi-transparente 10 de sorte que l'observateur 12 ne voit pas un segment horizontal (ou vertical) lorsque les pixels d'affichage d'une rangée de l'écran d'affichage sont activés mais un segment incliné par rapport à la direction horizontale d'un angle d'inclinaison α. De façon analogue, l'observateur 12 ne voit pas un segment vertical (ou horizontal) lorsque les pixels d'affichage d'une colonne de l'écran d'affichage sont activés mais un segment incliné par rapport à la direction verticale d'un angle d'inclinaison α.

L'angle d'inclinaison α est de préférence compris entre 15° et 60°, plus préférentiellement entre 18° et 45°, encore plus préférentiellement entre 20° et 30°, par exemple de l'ordre de 27°.

Dans l'exemple de viseur tête haute 5 représenté en figure 1, ceci peut être obtenu en faisant pivoter l'écran d'affichage 16, autour de l'axe optique du système optique 18, de l'angle d'inclinaison α depuis la position classique de l'écran 16.

De ce fait, des pixels d'affichage de l'écran 16 appartenant à des rangées et à des colonnes différentes doivent être activés pour afficher un élément qui est perçu par l'observateur 12 comme étant orienté selon la direction horizontale. Un exemple d'un tel élément 40 est représenté en figure 5 et comprend quatre groupes 42 de deux pixels appartenant à quatre rangées différentes.

De façon analogue, des pixels d'affichage de l'écran appartenant à des rangées et à des colonnes différentes doivent être activés pour afficher un élément qui est perçu par l'observateur 12 comme étant orienté selon la direction verticale. Un exemple d'un tel élément 44 est représenté en figure 5 et comprend quatre groupes 46 de deux pixels appartenant à quatre colonnes différentes.

Les deux inconvénients décrits précédemment lorsque l'écran d'affichage 16 est dans la position classique ne sont plus présents.

En effet, l'affichage d'un élément parfaitement horizontal ou d'un élément quasiment horizontal correspond, dans les deux cas, à l'activation de groupes de pixels d'affichage, par exemple comprenant chacun entre 5 et 20 pixels d'affichage appartenant à au moins deux rangées et à plusieurs colonnes différentes. Le nombre et la position des groupes de pixels d'affichage et le nombre de pixels d'affichage par groupe de pixels d'affichage changent peu lors de la transition entre l'affichage d'un élément parfaitement horizontal et l'affichage d'un élément quasiment horizontal. De ce fait, cette transition est perçue de façon plus fluide par l'observateur 12, ce qui la rend plus confortable.

En outre, les courants acheminés par les pistes conductrices associées aux colonnes d'un écran d'affichage à diodes électroluminescentes sont réduits lors de l'affichage d'un élément vertical puisque des pixels d'affichage appartenant à plusieurs colonnes différentes sont alors activés.

Selon un mode de réalisation, le module de commande 20 est adapté à fournir directement des images numériques adaptées à un écran d'affichage incliné de l'angle d'inclinaison α.

Selon un autre mode de réalisation, les images numériques à afficher, qui sont déterminées ou reçues par le module de commande 20, correspondent à des premières images numériques adaptées à un écran d'affichage disposé selon la position classique décrite précédemment. Dans ce cas, le module d'affichage 20 peut, pour chaque première image numérique à afficher, déterminer une deuxième image numérique correspondant à la première image numérique à laquelle est appliquée une transformation mathématique correspondant à une rotation d'un angle égal à l'opposé de l'angle d'inclinaison α en prenant, par exemple, comme centre de rotation, le centre de la première image numérique. Le module 20 commande alors l'écran 16 pour l'affichage de la deuxième image numérique.

Selon une variante, le module 20 commande l'écran 16 pour l'affichage de la première image numérique en transmettant des signaux de commande adaptés à l'écran 16 et le circuit d'activation des pixels d'affichage 22 de l'écran d'affichage 16 comprend des circuits pour modifier les signaux de commande de façon à afficher une deuxième image numérique correspondant à la rotation de la première image d'un angle opposé à l'angle d'inclinaison α.

De façon générale, les informations à afficher sont situées dans un cercle dont le centre est le centre de l'écran d'affichage et dont le rayon correspond à la moitié de la largeur ou de la hauteur de l'écran d'affichage. De ce fait, après l'application d'une transformation mathématique correspondant à une rotation d'angle opposé à l'angle d'inclinaison α, toutes les informations à afficher sont également présentes dans l'image numérique finale. Il n'y a donc pas d'information perdue. L'application de la rotation d'angle -α peut être réalisée par traitement numérique par le module de commande 20. A titre de variante, l'application de la rotation d'angle -α à l'image numérique peut être réalisée directement par les circuits de sélection de l'écran d'affichage.

La figure 6 est un schéma-bloc d'un dispositif de calcul 1000 qui peut être utilisé pour réaliser le module de commande 20. Le dispositif de calcul 1000 peut comprendre un ou plusieurs processeurs 1001 (Processor(s)) et un ou plusieurs supports de stockage non transitoire lisibles par ordinateur (par exemple, la mémoire 1003 (Memory)). La mémoire 1003 peut stocker, dans un moyen de stockage non transitoire lisible par ordinateur, des instructions de programme informatique qui, lorsqu'elles sont exécutées, mettent en oeuvre les fonctions décrites précédemment réalisées par le module de commande 20. Le processeur ou les processeurs 1001 peuvent être couplés à la mémoire 1003 et peuvent exécuter ces instructions de programme d'ordinateur pour entraîner la réalisation de ces fonctions.

Le dispositif de calcul 1000 peut également comprendre une interface 1005 d'entréé/sortie de réseau (Network I/O Interface(s)) par laquelle le dispositif de calcul peut communiquer avec d'autres dispositifs de calcul (par exemple, sur un réseau), et peut également comprendre une ou plusieurs interfaces d'utilisateur 1007 (User I/O Interface(s)), par l'intermédiaire desquelles le dispositif de calcul peut fournir des signaux de sortie à un utilisateur et recevoir des signaux d'entrée provenant de l'utilisateur. Les interfaces d'utilisateur peuvent comprendre des périphériques tels qu'un clavier, une souris, un microphone, un périphérique d'affichage (p.ex. un moniteur ou un écran tactile), des haut-parleurs, une caméra, et/ou divers autres types de périphérique entrée/sortie.

Les modes de réalisation décrits précédemment peuvent être mis en oeuvre de plusieurs façons. A titre d'exemple, les modes de réalisation peuvent être mis en oeuvre à l'aide d'un circuit dédié, d'un logiciel ou d'une combinaison de ceux-ci. Lorsqu'ils sont mis en oeuvre par logiciel, le code logiciel peut être exécuté sur n'importe quel processeur approprié (par exemple, un microprocesseur) ou un ensemble de processeurs, qu'ils soient prévus dans un dispositif de calcul unique ou répartis entre plusieurs dispositifs de calcul. Il convient de noter que tout composant ou ensemble de composants qui réalise les fonctions décrites précédemment peut être considéré comme un ou plusieurs contrôleurs qui commandent les fonctions décrites précédemment. Le contrôleur ou les contrôleurs peuvent être mis en oeuvre de nombreuses façons, par exemple avec un circuit électronique dédié ou avec un circuit à usage général (par exemple, un ou plusieurs processeurs) qui est programmé à l'aide d'un logiciel ou d'un microcode pour exécuter les étapes de procédé décrites ci-dessus.

À cet égard, il convient de noter qu'un mode de réalisation décrit ici comprend au moins un support de stockage lisible par ordinateur (RAM, ROM, EEPROM, mémoire flash ou une autre technologie de mémoire, CD-ROM, disque numérique polyvalent (DVD) ou un autre support à disque optique, cassette magnétique, bande magnétique, disque de stockage magnétique ou un autre dispositif de stockage magnétique, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation décrits précédemment. Le support lisible par ordinateur peut être transportable de sorte que le programme stocké sur celui-ci peut être chargé sur n'importe quel dispositif de calcul pour mettre en oeuvre des aspects des techniques décrites ici. En outre, il convient de noter que la référence à un programme d'ordinateur qui, lorsqu'il est exécuté, effectue l'une quelconque des fonctions décrites précédemment, ne se limite pas à un programme d'application s'exécutant sur un ordinateur hôte. Au contraire, les termes programme d'ordinateur et logiciel sont utilisés ici dans un sens général pour faire référence à tout type de code informatique (par exemple, un logiciel d'application, un mircrologiciel, un microcode, ou toute autre forme d'instruction d'ordinateur) qui peut être utilisé pour programmer un ou plusieurs processeurs pour mettre en oeuvre des aspects des techniques décrites ici.

Des modes de réalisation particuliers ont été décrits. Diverses variantes et modifications apparaîtront à l'homme de l'art. En particulier, dans le cas d'une application dans le domaine automobile, la lame semi-transparente du viseur peut faire partie du pare-brise du véhicule automobile. En outre, dans le cas d'un viseur tête haute équipant un casque, la lame semi-transparente du viseur peut faire partie de la visière du casque.

## Revendications

1. Viseur tête haute (5) comprenant un écran d'affichage matriciel (16) comprenant des pixels d'affichage (22) agencés en rangées et en colonnes, **caractérisé en ce que** l'écran d'affichage est pivoté, autour d'un axe perpendiculaire à l'écran, d'un angle d'inclinaison (α) compris entre 10 et 80 degrés, par rapport à la position de l'écran d'affichage pour laquelle un groupe de pixels d'affichage adjacents activés d'une même rangée apparaît à un observateur (12) orienté selon la direction horizontale ou verticale.

2. Viseur tête haute selon la revendication 1, dans lequel l'écran (16) est un écran à diodes électroluminescentes (32).

3. Viseur tête haute selon la revendication 2, dans lequel l'écran (16) est un écran à diodes électroluminescentes organiques (32).

4. Viseur tête haute selon la revendication 1, dans lequel l'écran (16) est un écran à cristaux liquides.

5. Viseur tête haute selon l'une quelconque des revendications 1 à 4, comprenant un module (20) de commande de l'écran d'affichage (16) adapté à déterminer une première image numérique comprenant une matrice de pixels d'image, à déterminer une deuxième image numérique à partir de la première image numérique, la deuxième image correspondant à la rotation de la première image d'un angle opposé à l'angle d'inclinaison et à commander l'affichage de la deuxième image sur l'écran d'affichage.

6. Viseur tête haute selon l'une quelconque des revendications 1 à 4, dans lequel l'écran d'affichage (16) comprend un circuit d'activation des pixels d'affichage (22), le viseur comprenant, en outre, un module (20) de commande de l'écran d'affichage (16) adapté à déterminer une première image numérique comprenant une matrice de pixels d'image et à fournir des signaux de commande au circuit d'activation pour l'affichage de la première image, le circuit d'activation étant adapté à modifier les signaux de commande pour l'affichage d'une deuxième image numérique correspondant à la rotation de la première image d'un angle opposé à l'angle d'inclinaison.

7. Viseur tête haute selon l'une quelconque des revendications 1 à 6, dans lequel l'angle d'inclinaison (α) est compris entre 15 et 40 degrés par rapport à la direction horizontale ou verticale.

8. Viseur tête haute selon l'une quelconque des revendications 1 à 7, dans lequel l'angle d'inclinaison (α) est compris entre 20 et 30 degrés par rapport à la direction horizontale ou verticale.

9. Viseur tête haute selon l'une quelconque des revendications 1 à 8, comprenant, en outre, une lame semi-transparente (10) sur laquelle sont projetées les images fournies par l'écran d'affichage (16).

10. Viseur tête haute selon l'une quelconque des revendications 1 à 9, comprenant, en outre, un système optique (18) adapté à collimater à l'infini l'image affichée sur l'écran d'affichage (16).

## Patentansprüche

1. Ein Head-Up Display (5), wobei das Display einen Bildschirm (16) mit einem Array von Displaypixeln (22) aufweist, die in Reihen und Spalten angeordnet sind, **dadurch gekennzeichnet, dass** der Bildschirm um eine Achse geneigt ist, die senkrecht zu dem Bildschirm ist, um einen Neigungswinkel (α) zwischen 10 und 80 Grad, bezüglich der Lage des Bildschirms, für den eine Gruppe von benachbarten, aktivierten Displaypixel einer gleichen Reihe einem Betrachter (12) als entlang der horizontalen oder vertikalen Richtung ausgerichtet erscheint.

2. Das Head-Up Display nach Anspruch 1, wobei der Bildschirm (16) ein Bildschirm mit lichtemittierenden Dioden (32) ist.

3. Das Head-Up Display nach Anspruch 2, wobei der Bildschirm (16) ein Bildschirm mit organischen lichtemittierenden Dioden (32) ist.

4. Das Head-Up Display nach Anspruch 1, wobei der Bildschirm (16) ein Flüssigkristall Bildschirm ist.

5. Das Head-Up Display nach einem der Ansprüche 1 bis 4, wobei das Display ferner eine Steuereinheit (20) des Bildschirms (16) aufweist, die geeignet ist ein erstes digitales Bild zu bestimmen, das ein Array von Bildpixeln aufweist, ein zweites digitales Bild von dem ersten digitalen Bild zu bestimmen, wobei das zweite digitale Bild der Drehung des ersten digitalen Bildes um einen Winkel entgegen dem Neigungswinkel entspricht, und geeignet ist das Anzeigen des zweiten Bildes auf dem Bildschirm zu steuern.

6. Das Head-Up Display nach einem der Ansprüche 1 bis 4, wobei der Bildschirm (16) einen Schaltkreis zum Aktivieren der Displaypixel (22) aufweist, wobei das Display ferner eine Steuereinheit (20) des Bildschirms (16) aufweist, die geeignet ist ein erstes digitales Bild zu bestimmen, das ein Array von Bildpixeln aufweist und geeignet ist Steuersignale für den Aktivierungsschaltkreis bereitzustellen um das erste Bild anzuzeigen, wobei der Aktivierungsschaltkreis geeignet ist die Steuersignale für das Anzeigen eines zweiten digitalen Bildes zu modifizieren, entsprechend der Drehung des ersten Bildes um einen Winkel entgegen dem Neigungswinkel.

7. Das Head-Up Display nach einem der Ansprüche 1 bis 6, wobei der Neigungswinkel (α) zwischen 15 und 40 Grad liegt, bezüglich der horizontalen oder vertikalen Ausrichtung.

8. Das Head-Up Display nach einem der Ansprüche 1 bis 7, wobei der Neigungswinkel (α) zwischen 20 und 30 Grad liegt, bezüglich der horizontalen oder vertikalen Ausrichtung.

9. Das Head-Up Display nach einem der Ansprüche 1 bis 8, wobei das Display ferner einen Strahlteiler (10) aufweist auf dem die Bilder, die durch den Bildschirm (16) bereitgestellt werden, projiziert sind.

10. Das Head-Up Display nach einem der Ansprüche 1 bis 9, wobei das Display ferner ein optisches System (18) aufweist, das geeignet ist das Bild, das auf dem Bildschirm (16) angezeigt wird auf unendlich zu kollimieren.

## Claims

1. A head-up display (5) comprising a display screen (16) comprising an array of display pixels (22) arranged in rows and in columns, **characterized in that** the display screen is pivoted, around an axis perpendicular to the screen, by an inclination angle (α) between 10 and 80 degrees, with respect to the position of the display screen for which a group of adjacent activated display pixels of a same row appears to an observer (12) as being directed along the horizontal or vertical direction.

2. The head-up display of claim 1, wherein the display screen (16) is a screen with light-emitting diodes (32).

3. The head-up display of claim 2, wherein the display screen (16) is a screen with organic light-emitting diodes (32).

4. The head-up display of claim 1, wherein the display screen (16) is a liquid crystal display screen.

5. The head-up display of any of claims 1 to 4, comprising a control unit (20) of the display screen (16) capable of determining a first digital image comprising an array of image pixels, of determining a second digital image from the first digital image, the second image corresponding to the rotation of the first image by an angle opposite to the inclination angle and of controlling the display of the second image on the display screen.

6. The head-up display of any of claims 1 to 4, wherein the display screen (16) comprises a circuit for activating the display pixels (22), the display further comprising a control unit (20) of the display screen (16) capable of determining a first digital image comprising an array of image pixels and of providing control signals to the activation circuit for the display of the first image, the activation circuit being capable of modifying the control signals for the display of a second digital image corresponding to the rotation of the first image by an angle opposite to the inclination angle.

7. The head-up display of any of claims 1 to 6, wherein the inclination angle (α) is between 15 and 40 degrees with respect to the horizontal or vertical direction.

8. The head-up display of any of claims 1 to 7, wherein the inclination angle (α) is between 20 and 30 degrees with respect to the horizontal or vertical direction.

9. The head-up display of any of claims 1 to 8, further comprising a beam splitter (10) having the images provided by the display screen (16) projected thereon.

10. The head-up display of any of claims 1 to 9, further comprising an optical system (18) capable of collimating at infinity the image displayed on the display screen (16).
